# EUROPÄISCHE PATENTSCHRIFT

(11) **EP 3 458 751 B1**
(45) Veröffentlichungstag und Bekanntmachung des Hinweises auf die Patenterteilung: **06.05.2020**
(21) Anmeldenummer: 17713254.5
(22) Anmeldetag: 23.03.2017
(51) Int. Cl.: F16K 31/06

(54) **VENTILPATRONE FÜR EIN MAGNETVENTIL UND ZUGEHÖRIGES MAGNETVENTIL**
VALVE CARTRIDGE FOR A MAGNET VALVE, AND CORRESPONDING MAGNET VALVE
CARTOUCHE DE VANNE POUR UNE ÉLECTROVANNE ET ÉLECTROVANNE ASSOCIÉE

(30) Priorität: 17.05.2016 DE 102016208414
(43) Veröffentlichungstag der Anmeldung: 27.03.2019
(73) Patentinhaber: Robert Bosch GmbH, 70442 Stuttgart (DE)
(72) Erfinder: FINK, Reinhard, 68723 Schwetzingen (DE)
(86) Internationale Anmeldenummer: PCT/EP2017/056944
(87) Internationale Veröffentlichungsnummer: WO 2017/198373

(56) Entgegenhaltungen:
- DE-A1- 19 949 222
- DE-A1-102012 207 986
- US-A1- 2007 176 136
- US-A1- 2015 137 014

## Beschreibung

Die Erfindung geht aus von einer Ventilpatrone für ein Magnetventil nach der Gattung des unabhängigen Patentanspruchs 1. Gegenstand der vorliegenden Erfindung ist auch ein Magnetventil mit einer solchen Ventilpatrone.

In stromlosoffenen Magnetventilen kommt als Dichtelement ein Stößel mit einem Schließelement zum Einsatz. Die Stößelführung wird in der Regel als Kleeblattprofil mit mehreren Stegen und Aussparungen ausgeführt. Die Aussparungen zwischen den Stegen sollen den Volumenausgleich zwischen einem Dichtbereich des Ventils und einem Ankerraum gewährleisten. Die Stege selbst sollen den Kippwinkel zwischen Ventileinsatz und Stößel begrenzen. Solange der Ventileinsatz nur kleine partielle Rundheitsabweichungen ausweist, welche in Umfangsrichtung kleiner als die Stegbreite sind, ist dies auch wirksam. Ist der Bereich größer, kann der Stößel an dieser Stelle lokal stärker kippen. Der Kippwinkel hat jedoch einen Einfluss auf die Druckstellgenauigkeit und deren Streuung bzw. Reproduzierbarkeit.

Aus der DE 199 49 222 A1 ist eine gattungsgemäße Ventilpatrone für ein Magnetventil bekannt, welche eine Kapsel, einen innerhalb der Kapsel beweglich geführten Anker, einen hohlzylindrischen Ventileinsatz, welcher mit einem ersten Ende in die Kapsel eingeschoben ist, und einen Ventilkörper mit einem Hauptventilsitz umfasst, welcher in ein zweites Ende des hohlzylindrischen Ventileinsatzes eingeführt ist. Der Anker bewegt einen innerhalb des Ventileinsatzes geführten Stößel, welcher einen Grundkörper und einen Schließkörper mit einem Schließelement aufweist, welches zur Ausführung einer Dichtfunktion dichtend in den Hauptventilsitz des Ventilkörpers eintaucht. In den Grundkörper des Stößels ist mindestens eine Ausgleichsnut eingebracht, welche einen Volumenausgleich zwischen einem Dichtbereich und einem Ankerraum ermöglicht, wobei der Stößel eine axiale Aussparung aufweist, welche eine Überschneidung mit der mindestens einen Ausgleichsnut im Grundkörper aufweist und über eine an einem dem Anker zugewandten Ende des Stößels angeordnete radiale Aussparung mit dem Ankerraum verbunden ist.

Aus der DE 10 2012 207 986 A1 ist ein Elektromagnetventil mit in einem Ventilgehäuse in Reihe angeordneten zwei Ventilschließkörpern bekannt, die abhängig von der Schaltstellung eines Magnetankers betätigbar sind, dessen Stirnfläche mit einer Durchgangsbohrung versehen ist, sodass die Stirnfläche, die von einem im Ventilgehäuse fixierten Magnetkern abgewandt ist, als Ringfläche ausgebildet ist, die an einer Stirnfläche des ersten Ventilschließkörpers anlegbar ist, der unter der Wirkung einer Rückstellfeder den zweiten Ventilschließkörper kontaktiert. Um ein unerwünschtes Anhaften des ersten Ventilschließkörpers an der hydraulisch benetzten Ringfläche des Magnetankers zu verhindern, ist zwischen der Ringfläche und der Stirnfläche ein Hohlraum vorgesehen.

Aus der US 2015/0137014 A1 ist elektromagnetisches Ventil mit einer Magnetbaugruppe, einem Gehäuse, einem Anker und einer Rückstellfeder bekannt. Das Gehäuse weist ein zylindrisches Führungselement auf, das so konfiguriert ist, dass es die axiale Bewegung des Ankers unterstützt. In das Führungselement ist ein Sitzglied mit einer darin ausgebildeten Durchgangsöffnung eingeführt, an deren Ende ein Ventilsitz ausgebildet ist. Ein ortsfester Polkern ist so in einer Hülse angeordnet, dass er in axialer Richtung einen vorgegebenen Abstand zu einem Endabschnitt des Führungselements aufweist. Die Hülse ist flüssigkeitsdicht mit je einem Außenumfang eines Endabschnitts des Polkerns und einem äußeren Umfang des Endabschnitts des Führungselements verbunden. Der Anker bewegt einen Stößel, welcher einen Schließkörper mit einem Schließelement aufweist, welches zur Ausführung einer Dichtfunktion dichtend in den Ventilsitz des Sitzgliedes eintaucht. In den Anker ist mindestens eine Ausgleichsnut eingebracht, welche einen Volumenausgleich zwischen einem Dichtbereich und einem Ankerraum ermöglicht.

Aus der DE 10 2009 026 853 A1 ist beispielsweise eine Ventilpatrone bekannt, welche eine Hülse, einen mit der Hülse verbundenen Ventileinsatz, einen innerhalb der Hülse gegen die Kraft einer Rückstellfeder zwischen einer Geschlossenposition und einer Offenposition axial beweglich geführten Ventilanker, welcher mit einem Stößel mit Schließgeometrie gekoppelt ist, und einen mit dem Ventileinsatz verbundenen Ventilkörper mit einem Ventilsitz umfasst, welcher zwischen mindestens einer ersten Fluidöffnung und mindestens einer zweiten Fluidöffnung angeordnet ist. Die Schließgeometrie wirkt in der Geschlossenstellung dichtend mit einer Sitzgeometrie des Ventilsitzes zusammen und unterbricht eine Fluidströmung zwischen der mindestens einen ersten Fluidöffnung und der mindestens einen zweiten Fluidöffnung. In der Offenstellung ist die Schließgeometrie vom Ventilsitz abgehoben und ermöglicht die Fluidströmung zwischen der mindestens einen ersten Fluidöffnung und der mindestens einen zweiten Fluidöffnung.

### Offenbarung der Erfindung

Die Ventilpatrone für ein Magnetventil mit den Merkmalen des unabhängigen Patentanspruchs 1 hat den Vorteil, dass durch die umlaufende zylindrische Außenkontur an einem dem Anker zugewandten Ende des Stößels das Kippen des Stößels auch bei größeren partiellen Rundheitsabweichungen begrenzt werden kann. Zudem sind Ausführungsformen der erfindungsgemäßen Ventilpatrone gegenüber Fertigungstoleranzen robuster. Dies gilt in vorteilhafter Weise für die Druckstellgenauigkeit, deren Streuung aufgrund von Bauteiltoleranzen sowie die Reproduzierbarkeit bei ein und derselben Ventilpatrone. Der Volumenausgleich zwischen einem Dichtbereich und einem Ankerraum ist durch eine axiale Aussparung, welche eine Überschneidung mit mindestens einer Ausgleichsnut im Grundkörper aufweist und über mindestens eine radiale Aussparung mit dem Ankerraum verbunden ist, in vorteilhafter Weise weiterhin gewährleistet.

Die am Ende des Stößels angeordnete zylindrische Außenkontur schränkt über den gesamten Umfang radial den Bewegungsbereich ein. Hieraus folgt eine in vorteilhafter Weise verbesserte, genauere Führung des Stößels im Ventileinsatz. Die Einengung des Querschnittes im Führungsbereich der zylindrischen Außenkontur hat durch den Volumenausgleich in vorteilhafter Weise keinen Einfluss auf die Schaltgeschwindigkeit.

Bei einer Ausführung als Kunststoffspritzgussteil kann das Design des Stößels mit den vorhandenen Maschinen bzw. Werkzeugkonzepten hergestellt werden. Es bedarf nur einer einfachen Anpassung der Werkzeugkavitäten und eine spritzprozesstechnische Absicherung.

Ausführungsformen der vorliegenden Erfindung stellen eine Ventilpatrone für ein Magnetventil zur Verfügung, welche eine Kapsel, einen innerhalb der Kapsel beweglich geführten Anker, einen hohlzylindrischen Ventileinsatz, welcher mit einem ersten Ende in die Kapsel eingeschoben ist, und einen Ventilkörper mit einem Hauptventilsitz umfasst, welcher in ein zweites Ende des hohlzylindrischen Ventileinsatzes eingeführt ist. Der Anker bewegt einen innerhalb des Ventileinsatzes geführten Stößel, welcher einen Grundkörper und einen Schließkörper mit einem Schließelement aufweist, welches zur Ausführung einer Dichtfunktion dichtend in den Hauptventilsitz des Ventilkörpers eintaucht. In den Grundkörper des Stößels ist mindestens eine Ausgleichsnut eingebracht, welche einen Volumenausgleich zwischen einem Dichtbereich und einem Ankerraum ermöglicht. Hierbei weist der Stößel an seinem dem Anker zugewandten Ende eine umlaufende zylindrische Außenkontur, welche eine radiale Führung des Stößels im Ventileinsatz ausbildet, und eine axiale Aussparung auf, welche eine Überschneidung mit der mindestens einen Ausgleichsnut im Grundkörper aufweist und über mindestens eine radiale Aussparung mit dem Ankerraum verbunden ist.

Zudem wird ein Magnetventil mit einer Magnetbaugruppe und einer solchen Ventilpatrone vorgeschlagen, wobei innerhalb der Ventilpatrone ein Anker beweglich geführt ist, welcher von einer von der Magnetbaugruppe erzeugten Magnetkraft bewegbar ist.

Durch die in den abhängigen Ansprüchen aufgeführten Maßnahmen und Weiterbildungen sind vorteilhafte Verbesserungen der im unabhängigen Patentanspruch 1 angegebenen Ventilpatrone für ein Magnetventil möglich.

Besonders vorteilhaft ist, dass der Grundkörper mehrere Stege und Ausgleichsnuten aufweisen kann, welche jeweils eine Überschneidung mit der axialen Aussparung aufweisen. Zudem können an einer Ankeranlagefläche des Stößels mehrere radiale Aussparungen ausgebildet werden, welche die axiale Aussparung mit dem Ankerraum verbinden können. Die Abmessungen der axialen Aussparung sowie die Anzahl und Abmessungen der Ausgleichsnuten und der radialen Aussparungen können in vorteilhafter Weise so gewählt und ausgeführt werden, dass die Anforderungen an das Dämpfungsverhalten und die Ventildynamik erfüllt bzw. eingehalten werden.

In vorteilhafter Ausgestaltung der Ventilpatrone für ein Magnetventil kann der Stößel als Kunststoffspritzteil ausgeführt werden, an dessen Grundkörper ein Hohlzylinder mit der zylindrischen Außenkontur und der axialen Aussparung und der mindestens einen radialen Aussparung angespritzt werden kann. Dies ermöglicht eine besonders einfache und kostengünstige Herstellung des Stößels für die Ventilpatrone.

In weiterer vorteilhafter Ausgestaltung der Ventilpatrone für ein Magnetventil kann der Ventileinsatz als kostengünstige einteilige geschlitzte Hülse ausgeführt werden. Der Ventilkörper kann beispielsweise als haubenförmige Hülse ausgeführt werden, welche so in das zweite Ende des Ventileinsatzes eingepresst werden kann, dass der Hauptventilsitz innerhalb des Ventileinsatzes angeordnet ist.

Ein Ausführungsbeispiel der Erfindung ist in der Zeichnung dargestellt und wird in der nachfolgenden Beschreibung näher erläutert.

### Kurze Beschreibung der Zeichnungen

Fig. 1 zeigt eine schematische Schnittdarstellung eines Ausführungsbeispiels einer Ventilpatrone für ein Magnetventil.
Fig. 2 zeigt eine schematische Schnittdarstellung des Ausführungsbeispiels der Ventilpatrone für ein Magnetventil aus Fig. 1 entlang der Schnittlinie II - II.
Fig. 3 zeigt eine schematische Schnittdarstellung des Ausführungsbeispiels der Ventilpatrone für ein Magnetventil aus Fig. 1 entlang der Schnittlinie III - III.
Fig. 4 zeigt eine schematische Draufsicht von oben auf ein Ausführungsbeispiel eines Stößels der Ventilpatrone für ein Magnetventil aus Fig. 1.
Fig. 5 zeigt eine schematische Draufsicht von unten auf ein Ausführungsbeispiel eines Stößels der Ventilpatrone für ein Magnetventil aus Fig. 1.
Fig. 6 zeigt eine schematische Schnittdarstellung im Bereich des Ankerraums einer herkömmlichen Ventilpatrone für ein Magnetventil, deren Ventileinsatz eine partielle Rundheitsabweichung aufweist.
Fig. 7 zeigt eine schematische Schnittdarstellung im Bereich des Ankerraums der Ventilpatrone für ein Magnetventil aus Fig. 1, deren Ventileinsatz eine partielle Rundheitsabweichung aufweist.

### Ausführungsformen der Erfindung

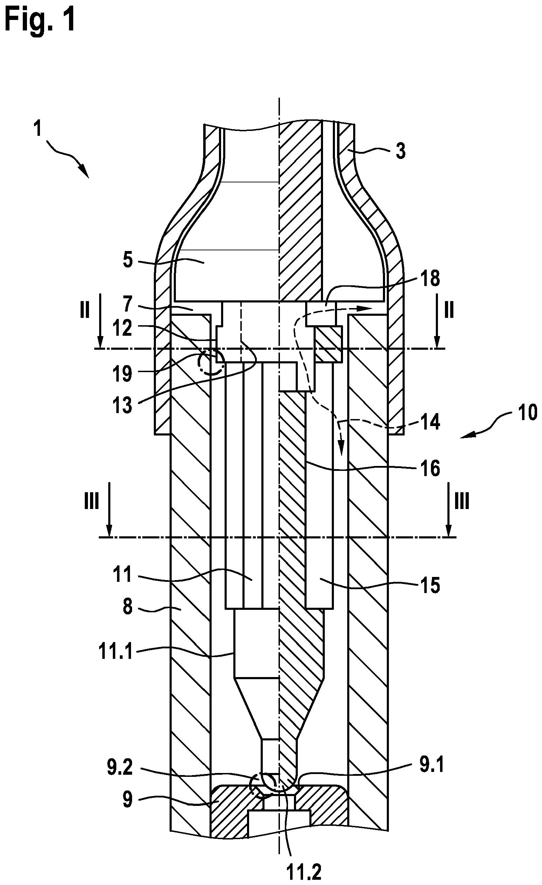

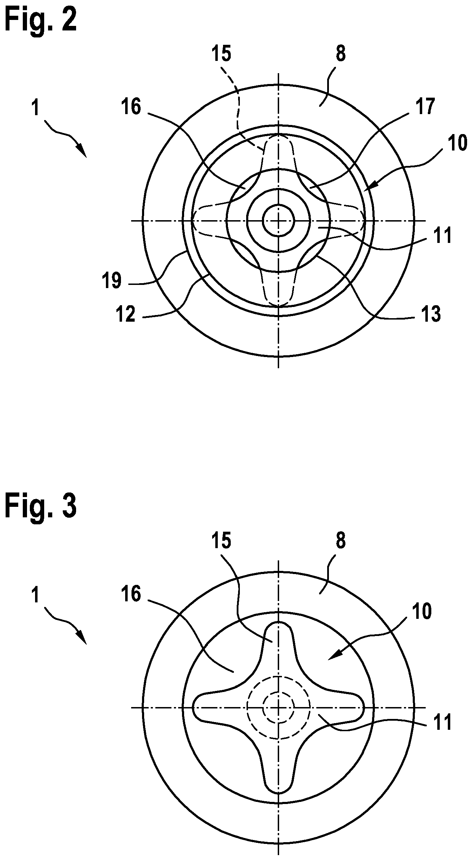

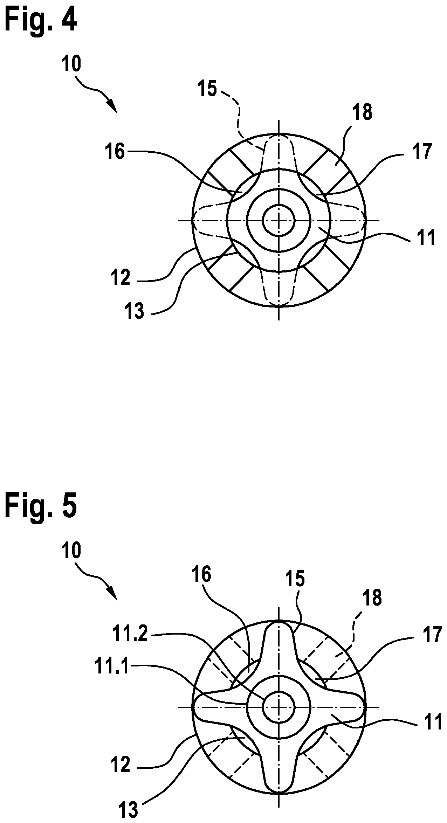

Wie aus Fig. 1 bis 5 ersichtlich ist, umfasst das dargestellte Ausführungsbeispiel einer erfindungsgemäßen Ventilpatrone 1 für ein Magnetventil eine Kapsel 3, einen innerhalb der Kapsel 3 beweglich geführten Anker 5, einen hohlzylindrischen Ventileinsatz 8, welcher mit einem ersten Ende in die Kapsel 3 eingeschoben ist, und einen Ventilkörper 9 mit einem Hauptventilsitz 9.1, welcher in ein zweites Ende des hohlzylindrischen Ventileinsatzes 8 eingeführt ist. Der Anker 5 bewegt einen innerhalb des Ventileinsatzes 8 geführten Stößel 10, welcher einen Grundkörper 11 und einen Schließkörper 11.1 mit einem Schließelement 11.2 aufweist, welches zur Ausführung einer Dichtfunktion dichtend in den Hauptventilsitz 9.1 des Ventilkörpers 9 eintaucht. In den Grundkörper 11 des Stößels 10 ist mindestens eine Ausgleichsnut 16 eingebracht, welche einen Volumenausgleich 14 zwischen einem Dichtbereich 9.2 und einem Ankerraum 7 ermöglicht. Hierbei weist der Stößel 10 an seinem dem Anker 5 zugewandten Ende eine umlaufende zylindrische Außenkontur 12, welche eine radiale Führung 19 des Stößels 10 im Ventileinsatz 8 ausbildet, und eine axiale Aussparung 13 auf, welche eine Überschneidung 17 mit der mindestens einen Ausgleichsnut 16 im Grundkörper 11 aufweist und über mindestens eine radiale Aussparung 18 mit dem Ankerraum 7 verbunden ist.

Wie aus Fig. 1 bis 5 weiter ersichtlich ist, ist der Grundkörper 11 des Stößels 10 im dargestellten Ausführung als Kleeblattprofil mit vier Stegen 15 und Ausgleichsnuten 16 ausgeführt, welche jeweils eine Überschneidung 17 mit der axialen Aussparung 13 aufweisen. Selbstverständlich kann auch eine andere Anzahl von Stegen 16 und Ausgleichsnuten 16 vorgesehen werden.

Wie aus Fig. 1 bis 5 weiter ersichtlich ist, sind an einer Ankeranlagefläche des Stößels 10 vier radiale Aussparungen 18 ausgebildet, welche die axiale Aussparung 13 mit dem Ankerraum 7 verbinden.

Im dargestellten Ausführungsbeispiel ist der Stößel 10 als kostengünstiges Kunststoffspritzteil ausgeführt, an dessen Grundkörper 11 ein Hohlzylinder mit der zylindrischen Außenkontur 12 und der axialen Aussparung 13 und den vier radialen Aussparungen 18 angespritzt ist. Der Ventileinsatz 8 ist als einteilige geschlitzte Hülse ausgeführt. Der Ventilkörper 9 ist als haubenförmige Hülse ausgeführt, welche so in das zweite Ende des Ventileinsatzes 8 eingepresst ist, dass der Hauptventilsitz 9.1 innerhalb des Ventileinsatzes 8 angeordnet ist. Der Ventilkörper 9 kann beispielsweise als Tiefziehteil hergestellte werden.

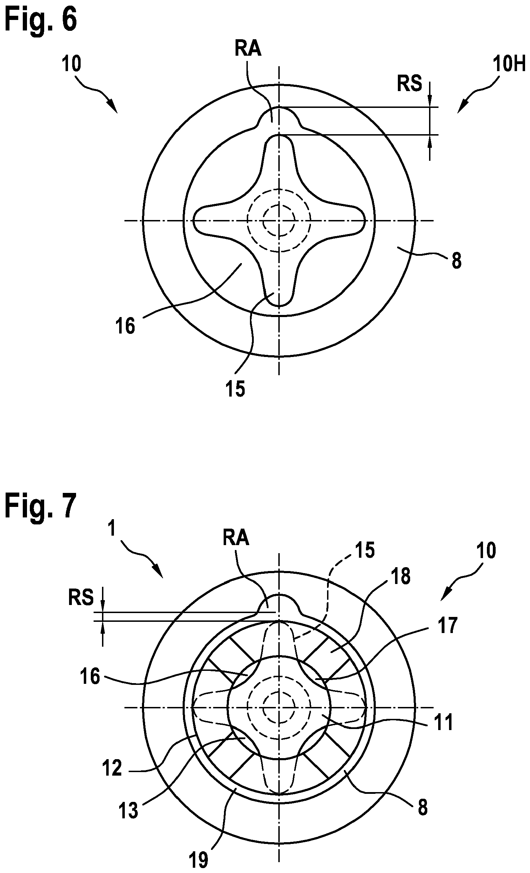

Die Aussparungen bzw. Ausgleichsnuten 16 zwischen den Stegen 15 sollen den Volumenausgleich 14 zwischen dem Dichtbereich 9.1 und dem Ankerraum 7 gewährleisten. Die Stege 15 selbst sollen bei einer herkömmlichen, in Fig. 6 dargestellten Ventilpatrone 1H einen Kippwinkel zwischen Ventileinsatz 8 und Stößel 10H begrenzen. Solange der Ventileinsatz 8 nur kleine partielle Rundheitsabweichungen RA aufweist, welche in Umfangsrichtung kleiner als die Stegbreite sind ist dies auch wirksam. Ist der Bereich der Rundheitsabweichung RA größer, dann ist das wirksame Radialspiel RS des Stößels 10H größer und der Stößel 10H der herkömmlichen Ventilpatrone 1H kann an dieser Stelle lokal stärker kippen, wie aus Fig. 6 ersichtlich ist. Wie aus Fig. 7 weiter ersichtlich ist, wird durch die angespritzte zylindrische Außenkontur 12 das wirksame Radialspiel RS des Stößels und damit das Kippen des Stößels 10 bei Ausführungsformen einer erfindungsgemäßen Ventilpatrone 1 auch bei größeren partiellen Rundheitsabweichungen RA begrenzt. Dadurch sind Ausführungsformen der erfindungsgemäßen Ventilpatrone 1 gegenüber Fertigungstoleranzen robuster. Dies gilt insbesondere für die Druckstellgenauigkeit, deren Streuung aufgrund von Bauteiltoleranzen sowie die Reproduzierbarkeit bei ein und derselben Ventilpatrone 1.

Durch die zylindrische axiale Aussparung 13 sowie die radialen Aussparungen 18 an der Ankeranlagefläche des Stößels 10, welche die axiale Aussparung 13 mit dem Ankerraum 7 verbinden, ist der erforderliche Volumenausgleich zwischen Dichtbereich 9.2 und Ankerraum 7 in vorteilhafter Weise möglich.

Das dargestellte Ausführungsbeispiel der erfindungsgemäßen Ventilpatrone 1 kann beispielsweise in einem stromlosoffenen Magnetventil mit einer Magnetbaugruppe eingesetzt werden. Hierbei wird der innerhalb der Ventilpatrone 1 beweglich geführte Anker 5 von einer von der nicht näher dargestellten Magnetbaugruppe erzeugten Magnetkraft bewegt, um das Magnetventil zu schließen, d.h. das Schließelement 11.2 in den Hauptventilsitz 9.1 zu drücken. Die Rückstellung des Stößels 10 in die Offenstellung erfolgt bei Abschalten der Magnetbaugruppe durch eine nicht näher dargestellte Rückstellfeder.

## Patentansprüche

1. Ventilpatrone (1) für ein Magnetventil, mit einer Kapsel (3), einem innerhalb der Kapsel (3) beweglich geführten Anker (5), einem hohlzylindrischen Ventileinsatz (8), welcher mit einem ersten Ende in die Kapsel (3) eingeschoben ist, und einem Ventilkörper (9) mit einem Hauptventilsitz (9.1), welcher in ein zweites Ende des hohlzylindrischen Ventileinsatzes (8) eingeführt ist, wobei der Anker (5) einen innerhalb des Ventileinsatzes (8) geführten Stößel (10) bewegt, welcher einen Grundkörper (11) und einen Schließkörper (11.1) mit einem Schließelement (11.2) aufweist, welches zur Ausführung einer Dichtfunktion dichtend in den Hauptventilsitz (9.1) des Ventilkörpers (9) eintaucht, wobei mindestens eine Ausgleichsnut (16) in den Grundkörper (11) des Stößels (10) eingebracht ist, welche einen Volumenausgleich (14) zwischen einem Dichtbereich (9.2) und einem Ankerraum (7) ermöglicht, wobei der Stößel (10) eine axiale Aussparung (13) aufweist, welche eine Überschneidung (17) mit der mindestens einen Ausgleichsnut (16) im Grundkörper (11) aufweist und über mindestens eine radiale Aussparung (18) mit dem Ankerraum (7) verbunden ist, **dadurch gekennzeichnet, dass** der Stößel (10) an seinem dem Anker (5) zugewandten Ende eine geschlossene umlaufende zylindrische Außenkontur (12) aufweist, welche eine radiale Führung (19) des Stößels (10) im Ventileinsatz (8) ausbildet.

2. Ventilpatrone nach Anspruch 1, **dadurch gekennzeichnet, dass** der Grundkörper (11) mehrere Stege (15) und Ausgleichsnuten (16) aufweist, welche jeweils eine Überschneidung (17) mit der axialen Aussparung (13) aufweisen.

3. Ventilpatrone nach Anspruch 1 oder 2, **dadurch gekennzeichnet, dass** an einer Ankeranlagefläche des Stößels (10) mehrere radiale Aussparungen (18) ausgebildet sind, welche die axiale Aussparung (13) mit dem Ankerraum (7) verbinden.

4. Ventilpatrone nach einem der Ansprüche 1 bis 3, **dadurch gekennzeichnet, dass** der Stößel (10) als Kunststoffspritzteil ausgeführt ist, an dessen Grundkörper (11) ein Hohlzylinder mit der zylindrischen Außenkontur (12) und der axialen Aussparung (13) und der mindestens einen radialen Aussparung (18) angespritzt ist.

5. Ventilpatrone nach einem der Ansprüche 1 bis 4, **dadurch gekennzeichnet, dass** der Ventileinsatz (8) als einteilige geschlitzte Hülse ausgeführt ist.

6. Ventilpatrone nach einem der Ansprüche 1 bis 5, **dadurch gekennzeichnet, dass** der Ventilkörper (9) als haubenförmige Hülse ausgeführt ist, welche so in das zweite Ende des Ventileinsatzes (8) eingepresst ist, dass der Hauptventilsitz (9.1) innerhalb des Ventileinsatzes (8) angeordnet ist.

7. Magnetventil mit einer Magnetbaugruppe und einer Ventilpatrone (1), wobei innerhalb der Ventilpatrone (1) ein Anker (5) beweglich geführt ist, welcher von einer von der Magnetbaugruppe erzeugten Magnetkraft bewegbar ist, **dadurch gekennzeichnet, dass** die Ventilpatrone (1) nach einem der Ansprüche 1 bis 6 ausgeführt ist.

## Claims

1. Valve cartridge (1) for a magnet valve, having a capsule (3), an armature (5), which is movably guided within the capsule (3), a hollow-cylindrical valve insert (8), a first end of which is inserted into the capsule (3), and a valve body (9) having a primary valve seat (9.1), which is inserted into a second end of the hollow-cylindrical valve insert (8), wherein the armature (5) moves a plunger (10) guided within the valve insert (8), said plunger (10) having a main body (11) and a closing body (11.1) having a closing element (11.2), which plunges into the primary valve seat (9.1) of the valve body (9) in a sealing manner in order to carry out a sealing function, wherein at least one equalization groove (16) is introduced into the main body (11) of the plunger (10), said groove enabling a volume equalization (14) between a sealing region (9.2) and an armature chamber (7), wherein the plunger (10) has an axial recess (13), which has an overlap (17) with the at least one equalization groove (16) in the main body (11) and is connected to the armature chamber (7) via at least one radial recess (18), **characterized in that** the plunger (10) has, at its end facing the armature (5), a closed encircling cylindrical outer contour (12), which forms a radial guide (19) of the plunger (10) in the valve insert (8).

2. Valve cartridge according to Claim 1, **characterized in that** the main body (11) has a plurality of webs (15) and equalization grooves (16), which each have an overlap (17) with the axial recess (13).

3. Valve cartridge according to Claim 1 or 2, **characterized in that** a plurality of radial recesses (18), which connect the axial recess (13) to the armature chamber (7), is formed in an armature contact surface of the plunger (10).

4. Valve cartridge according to one of Claims 1 to 3, **characterized in that** the plunger (10) is embodied as an injection-molded plastic part, onto the main body (11) of which a hollow cylinder having the cylindrical outer contour (12) and the axial recess (13) and the at least one radial recess (18) is molded.

5. Valve cartridge according to one of Claims 1 to 4, **characterized in that** the valve insert (8) is embodied as a single-part slotted sleeve.

6. Valve cartridge according to one of Claims 1 to 5, **characterized in that** the valve body (9) is embodied as a hood-shaped sleeve which is pressed into the second end of the valve insert (8) in such a way that the primary valve seat (9.1) is arranged within the valve insert (8).

7. Magnet valve having a magnet subassembly and a valve cartridge (1), wherein an armature (5) is movably guided within the valve cartridge (1), said armature being movable by a magnetic force produced by the magnet subassembly, **characterized in that** the valve cartridge (1) is embodied according to one of Claims 1 to 6.

## Revendications

1. Cartouche de vanne (1) pour une électrovanne, comprenant une capsule (3), une armature (5) guidée de manière déplaçable à l'intérieur de la capsule (3), un insert de vanne cylindrique creux (8) qui est enfoncé par une première extrémité dans la capsule (3) et un corps de vanne (9) avec un siège de vanne principal (9.1) qui est introduit dans une deuxième extrémité de l'insert de vanne cylindrique creux (8), l'armature (5) déplaçant une tige poussoir (10) guidée à l'intérieur de l'insert de vanne (8), qui présente un corps de base (11) et un corps de fermeture (11.1) avec un élément de fermeture (11.2) qui plonge hermétiquement dans le siège de vanne principal (9.1) du corps de vanne (9) pour effectuer une fonction d'étanchéité, au moins une rainure d'équilibrage (16) étant réalisée dans le corps de base (11) de la tige poussoir (10), laquelle permet d'équilibrer le volume (14) entre une zone d'étanchéité (9.2) et un espace d'armature (7), la tige poussoir (10) présentant un évidement axial (13) qui présente un recoupement (17) avec l'au moins une rainure d'équilibrage (16) dans le corps de base (11) et qui est connecté à l'espace d'armature (7) par le biais d'au moins un évidement radial (18), **caractérisée en ce que** la tige poussoir (10) présente, au niveau de son extrémité tournée vers l'armature (5), un contour extérieur cylindrique (12) périphérique fermé qui constitue un guide radial (19) de la tige poussoir (10) dans l'insert de vanne (8).

2. Cartouche de vanne selon la revendication 1, **caractérisée en ce que** le corps de base (11) présente plusieurs nervures (15) et rainures d'équilibrage (16) qui présentent à chaque fois un recoupement (17) avec l'évidement axial (13).

3. Cartouche de vanne selon la revendication 1 ou 2, **caractérisée en ce que** plusieurs évidements radiaux (18) sont réalisés au niveau d'une surface d'appui d'armature de la tige poussoir (10), lesquels relient l'évidement axial (13) à l'espace d'armature (7).

4. Cartouche de vanne selon l'une quelconque des revendications 1 à 3, **caractérisée en ce que** la tige poussoir (10) est réalisée sous forme de pièce moulée par injection de plastique au niveau du corps de base (11) de laquelle est surmoulé un corps cylindrique avec le contour extérieur cylindrique (12) et l'évidement axial (13) et l'au moins un évidement radial (18).

5. Cartouche de vanne selon l'une quelconque des revendications 1 à 4, **caractérisée en ce que** l'insert de vanne (8) est réalisé sous forme de douille fendue d'une seule pièce.

6. Cartouche de vanne selon l'une quelconque des revendications 1 à 5, **caractérisée en ce que** le corps de vanne (9) est réalisé sous forme de douille en forme de coiffe qui est pressée dans la deuxième extrémité de l'insert de vanne (8) de telle sorte que le siège de vanne principal (9.1) soit disposé à l'intérieur de l'insert de vanne (8).

7. Électrovanne comprenant un module magnétique et une cartouche de vanne (1), une armature (5) étant guidée de manière déplaçable à l'intérieur de la cartouche de vanne (1), laquelle peut être déplacée par une force magnétique générée par le module magnétique, **caractérisée en ce que** la cartouche de vanne (1) est réalisée selon l'une quelconque des revendications 1 à 6.
